# NEW EUROPEAN PATENT SPECIFICATION

(11) **EP 2 337 665 B2**
(45) Date of publication and mention of the opposition decision: **14.12.2022**
(45) Mention of the grant of the patent: 28.05.2014
(21) Application number: 09783677.9
(22) Date of filing: 02.10.2009
(51) Int. Cl.: B29C 49/00

(54) **INJECTION STRETCH BLOW-MOLDING PROCESS FOR THE PREPARATION OF POLYETHYLENE CONTAINERS**
SPRITZSTRECKBLASVERFAHREN ZUR HERSTELLUNG VON POLYETHYLENBEHÄLTERN
PROCÉDÉ DE MOULAGE PAR INJECTION-SOUFFLAGE AVEC BI-ÉTIRAGE POUR LA PRÉPARATION DE CONTENANTS EN POLYÉTHYLÈNE

(30) Priority: 23.10.2008 EP 08167437; 11.03.2009 US 209883 P
(43) Date of publication of application: 29.06.2011
(73) Proprietor: Basell Polyolefine GmbH, 50389 Wesseling (DE)
(72) Inventor: GOTTSCHALK, Anja, 63654 Buedingen (DE); ROGERS, Mike, Cheshire Macclesfield SK10 3DQ (GB)
(74) Representative: LyondellBasell
(86) International application number: PCT/EP2009/062809
(87) International publication number: WO 2010/046223

(56) References cited:
- EP-A1- 0 654 340
- EP-A1- 1 138 604
- EP-A1- 1 287 969
- EP-A1- 1 884 539
- EP-A1- 2 319 883
- EP-A2- 2 168 752
- WO-A1-03/018290
- WO-A1-2008/115980
- JP-A- 2000 296 826
- US-A- 5 858 491
- US-A1- 2008 221 273
- US-A1- 2011 236 708
- Datasheet Baseil Hostalen 6031D - HDPE
- Datasheet Exxon HYA800 - HDPE
- Viewmold HDPE processing conditions internet printout from www.viewmold.com

## Description

The present invention concerns an injection stretch blow-molding process for the preparation of polyethylene containers, particularly bottles.

Injection stretch blow-molding processes, both single- and two-stage, are commonly used in the art for the production of containers made of thermoplastic polymer materials, particularly polyethylene terephthalate (PET). In fact PET proves to be particularly adequate to be used for the above mentioned processes because it allows one to operate in a wide temperature range (window of process ability), and to obtain molded products having excellent mechanical properties and high transparency.

However, due to technical disadvantage, such as thermal and chemical resistance, there is a strong need to substitute PET with atternative thermoplastic materials. In particular, the crystalline olefin polymers or copolymers (especially polypropylene and polyethylene) are known to have excellent mechanical and thermal properties compared to PET.

Therefore many technical solutions have been proposed in the art to obtain polymer containers, in particular bottles, by subjecting olefin polymers to injection stretch blow-molding

From EP1287969 and EP1138604 it is known that glossy containers can be obtained by injection blow molding low to high density ethylene polymers.

However, as explained in EP-A-0654 340, the injection stretch-blow molding of polyethylene involves many technical difficulties. According to this document, the said difficulties can be overcome by entering a gas into the boundary between the core die and the preform before releasing it from the injection mold, and selecting specific process conditions. However the examples show also that the optical properties remain very poor, as only milky white bottles are obtained.

It has now been found that by using a polyethylene having particular values of Melt Flow Ratio (as defined hereinafter) and density, stretch-blow molded containers with valuable mechanical and optical properties are obtained without requiring modification of the conventional injection stretch-blow molding process techniques, in particular without requiring the said introduction of gas before releasing the preform from the injection mold. Thus the present invention provides an injection stretch blow-molding process for preparing polyethylene containers, wherein use is made, as the polyethylene material, of an ethylene (co)polymer having density equal to or greater than 0.945 g/cm³ (measured according to ISO 1183) and F/E ratio values equal to or greater than 60 (measured according to ISO 1133).

In particular, the process of the present invention comprises subjecting to stretch blow-molding a preform made of or comprising the above said ethylene (co)polymer.

Thus the said process comprises the steps defined in claim 1 wherein the polyethylene material comprises the said ethylene (co)polymer having density equal to or greater than 0.945 g/cm³, in particular from 0.945 g/cm³ to 0.960 g/cm³ (measured according to ISO 1183) and F/E ratio values equal to or greater than 60, in particular from 60 to 100 (measured according to ISO 1133).

The definition of "ethylene copolymer" according to the present invention comprises polymer materials selected from ethylene homopolymers and ethylene copolymers containing alpha-olefin monomer units having from 4 to 8 carbon atoms (preferably in amounts up to 10% by weight) and their mixtures. Examples of the said alpha-olefin monomer units having from 4 to 8 carbon atoms are 1-butene, 1-pentene, 1-hexene, 1-octene and 4-methyl-1-pentene. 1-butene is preferred.

The F/E ratio is the ratio between the Melt Flow Rate measured at 190°C with a load of 21.6 kg (also called condition F) and the Melt Flow Rate measured at 190°C with a load of 2.16 kg (also called condition E).

Preferred features for the said ethylene (co)polymers are:
- density equal to or greater than 0.950 g/cm³, in particular equal to or greater than 0.952 g/cm³, the upper limit being most preferably 0.960 g/cm³.
- F/E ratio values equal to or greater than 70, more preferably equal to or greater than 75, in particular equal to or greater than 80, the upper limit being most preferably 100;
- Melt Flow Rate E of 0.1 g/10 min. or more, more preferably of 0.5 g/10 min. or more, in particular from 0.1 or 0.5 to 10 g/10 min.

Melt Flow Rate E values of 0.5 g/10 min. or higher, in particular of 1 g/10 min. or higher (the preferred upper limit being of 10 g/10 min.), are particularly preferred when the density of the ethylene (co)polymer is equal to or lower than 0.955 g/cm³.

The said ethylene (co)polymers are available on the market. Specific commercial polymers having the said properties are described in the examples. They belong to the family of the (co)polymers that can be obtained by way of polymerization processes in the presence of coordination catalysts. Said processes and the (co)polymers obtained from them are widely described in the art.

In particular it is possible to carry out the polymerization process in the presence of a Ziegler-Natta catalyst.

As is well known, the Ziegler-Natta polymerization catalysts comprise the reaction product of an organic compound of a metal of Groups I-III of the Periodic Table (for example, an aluminum alkyl), and an inorganic compound of a transition metal of Groups IV-VIII of the Periodic Table (for example, a titanium halide), preferably supported on a Mg halide. The polymerization conditions to be used with such catalysts generally are well known also.

The said ethylene (co)polymers can also contain conventional additives.

Examples of these additives are heat stabilizers, antioxidants, UV absorbers, light stabilizers, metal deactivators, compounds which destroy peroxide, and basic costabilizers, typically in amounts of from 0.01 to 10 % by weight, preferably from 0.1 to 5 % by weight.

Generally, in the process of the invention the said preform is obtained by injecting the molten polymer in the appropriate molds, using processes and equipments well known in the art.

The temperature at which the polymer material is injected to obtain the preform should be selected by those skilled in the art depending on the particular polymer composition used. The injection temperature is from 210 to 260°C.

Typically the injection pressure is from 32 to 78 MPa (320 to 780 bar).

The mold used in such process step can be any conventional mold used to make preforms in injection stretch blow-molding equipments.

Both steps 1) and 2) in the process can be performed in the same machine, in the so-called single-stage process. In such a case it is operated without cooling the perform to room temperature.

Alternately, and preferably, step 1) may be carried out in a first piece of equipment (first process stage), and subsequently, in a second process stage, the obtained preforms are routed to a second piece of equipment for stretch blow-molding 2), in the so-called two-stage process. In such a case, the preforms can be allowed to cool to room temperature (about 25°C) before stretch blow-molding.

Typically the stretch-blow molding temperature for a single-stage process is from 115 to 130°C.

For the two-stage process the preforms are re-heated also to a typical temperature from 115 to 130°C.

More preferably, the temperature for the single-stage process and/or the two-stage process is of from 122 to 128 °C, that is the maximum temperature is well below the melting point of a standard polyethylene as used in the present process.

Infrared heating units are typically used, but one skilled in the art would recognize that any heat source consistent with the properties of the polymer composition may be used. The preforms are typically conveyed along a bank of heating units while being rotated to evenly distribute the heat. The preforms may also be contacted with cooling air during and after heating to minimize overheating of the preform surface. Once the pre-heated preforms exit the heating oven, the preforms are transferred to a blow mold.

Generally, to carry out process step 2), a stretch rod is inserted into the preform to stretch and guide the preform centrally in the axial direction. Pressurized gas (preferably air) at 0.1 to 4 MPa (1 to 40 bar), preferably 0.4 to 2 MPa (4 to 20 bar) is introduced to complete the blow molding of the finished container or bottle. Optionally, the pressurized gas can be introduced in two steps, where a pre-blow is performed by introducing pressurized gas at 0.1 to 2 MPa (1 to 20 bar), preferably 0.4 to 1-2 MPa (4 to 12 bar), followed by the final blow-molding at the higher pressures described above.

The stretch ratio is from 2 to 4.

As previously said, the process of the present invention allows one to obtain polymer containers having high physical-mechanical properties.

In particular, it allows to obtain containers, specifically bottles, having a high impact resistance and rather low Haze values, preferably of 50% or less.

The following examples, relating to the preparation of injection stretch-blow molded bottles, are given for illustrating but not limiting purposes.

Two types of 500 ml bottles are prepared.

Type 1 is prepared by using an ethylene polymer having density (ISO 1183) of 0.959 g/cm³, Melt Flow Rate E of 0.25 g/10 min. and F/E ratio of 84, sold by Lyondellbasell with trademark Hostalen ACP 5831 D.

Type 2 is prepared by using an ethylene polymer having density (ISO 1183) of 0.954 g/cm³, Melt Flow Rate E of 1.45 g/10 min. and F/E ratio of 87.5, sold by Lyondellbasell with trademark Hostalen ACP 6541 A UV.

The process conditions reported in Table 1, and the characteristics of the so obtained bottles are reported in Table 2.

**Table 1**

| **BOTTLE TYPE** | **1** | **2** |
|---|---|---|
| PREFORM CHARACTERISTICS | | |
| Weight of preform (g) | 18.2 | 18.1 |
| Maximum thickness of preform (mm) | 3.70 | 3.70 |
| Height of preform (mm) | 82.50 | 82.50 |
| Maximum outside diameter of preform (mm) | 34.00 | 34.00 |
| Minimum inside diameter of preform (mm) | 20.12 | 20.12 |

| PREFORM MOLDING PARAMETERS | | |
|---|---|---|
| Injection temperature (°C) | 225 | 225 |
| Mold temperature (°C) | 35 | 35 |
| Injection time (seconds) | 6.5 | 6.5 |
| Injection pressure (MPa) | 75 | 50 |

| STRETCH-BLOW MOLDING PARAMETERS | | |
|---|---|---|
| Blow molding temperature (°C) | 125 | 124 |
| Blow molding pressure (MPa) | 1.8 | 1.2 |
| Stretch ratio | 2.49 | 2.49 |

**Table 2**

| **BOTTLE TYPE** | **1** | **2** |
|---|---|---|
| Haze (%)¹ | 40.88 | 45.62 |
| Drop test at 22°C² (mm) | 200 | 200 |
| Drop test at 4°C² (mm) (mm) | 200 | 200 |

| Topload empty³ | | |
|---|---|---|
| Maximum load (N) | 86.79 | 67.92 |
| Strain at maximum load (mm) | 3.68 | 4.03 |

| Topload full³ | | |
|---|---|---|
| Maximum load (N) | 370.14 | 269.2 |
| Strain at maximum load (mm) | 8.35 | 6.55 |
| ¹ measured according to ASTM D1003; | | |
| ² and ³ measured according to the "Voluntary Standard Test Methods For PET Bottles" issued in 2004 by the International Society of Beverage Technologists | | |
| 8110 South Suncoats Boulevard Homossa, FL 34446-5006, USA. | | |

## Claims

1. Injection stretch blow-molding process for the preparation of polyethylene containers, comprising the following steps:
1) injection molding a polyethylene material into a preform at a temperature from 210 to 260°C;
2) subjecting the said preform to stretch blow-molding with a stretch ratio from 2 to 4;
wherein the polyethylene material comprises an ethylene polymer having density equal to or greater than 0.945 g/cm³ and F/E ratio values equal to or greater than 60.

2. The process of claim 1, wherein the ethylene polymer is selected from ethylene homopolymers, ethylene copolymers containing alpha-olefin monomer units having from 4 to 8 carbon atoms and their mixtures.

3. The process of claim 1, wherein the ethylene polymer has a Melt Flow Rate E of 0.1 g/10 min. or more.

4. The process of claim 1, wherein the preform is prepared and cooled to room temperature in a first stage, and then subjected to re-heating and stretch-blow molding in a second stage.

5. The process of claim 1, wherein the preform is prepared and subjected to stretch-blow molding without cooling to room temperature.

## Patentansprüche

1. Spritzstreckblasformverfahren zur Herstellung von Polyethylen-Behältern, umfassend die folgenden Schritte:
1) Spritzgießen eines Polyethylenmaterials in eine Vorform bei einer Temperatur von 210 bis 260 °C;
2) Unterziehen der Vorform dem Streckblasformen mit einem Streckverhältnis von 2 bis 4;
wobei das Polyethylenmaterial ein Ethylen-Polymer mit einer Dichte gleich oder größer als 0,945 g/cm³ und F/E-Verhältniswerten gleich oder größer als 60 umfasst.

2. Verfahren nach Anspruch 1, wobei das Ethylen-Polymer ausgewählt ist aus Ethylen-Homopolymeren, EthylenCopolymeren, enthaltend α-Olefin-Monomereinheiten mit von 4 bis 8 Kohlenstoffatomen und ihren Gemischen.

3. Verfahren nach Anspruch 1, wobei das Ethylen-Polymer eine Schmelzflussrate E von 0,1 g/10 min oder mehr aufweist.

4. Verfahren nach Anspruch 1, wobei die Vorform in einer ersten Stufe hergestellt und auf Raumtemperatur abgekühlt wird und dann in einer zweiten Stufe dem Wiedererhitzen und Streckblasformen unterzogen wird.

5. Verfahren nach Anspruch 1, wobei die Vorform hergestellt und ohne Abkühlen auf Raumtemperatur dem Streckblasformen unterzogen wird.

## Revendications

1. Procédé de moulage par injection-étirage-soufflage pour la préparation de récipients en polyéthylène, comprenant les étapes suivantes :
1) moulage par injection d'un matériau en polyéthylène en une préforme à une température de 210 à 260°C ;
2) soumission de ladite préforme à un moulage par étirage-soufflage avec un rapport d'étirage de 2 à 4 ;
dans lequel le matériau de polyéthylène comprend un polymère d'éthylène présentant une densité égale ou supérieure à 0,945 g/cm³ et des valeurs de rapport F/E égales ou supérieures à 60.

2. Procédé selon la revendication 1, dans lequel le polymère d'éthylène est choisi parmi les homopolymères d'éthylène, les copolymères d'éthylène contenant des motifs monomères alpha-oléfiniques comprenant 4 à 8 atomes de carbone et leurs mélanges.

3. Procédé selon la revendication 1, dans lequel le polymère d'éthylène présente un indice de fluidité à chaud E de 0,1 g/10 min ou plus.

4. Procédé selon la revendication 1, dans lequel la préforme est préparée et refroidie à température ambiante dans une première étape puis soumise à un réchauffage et à un moulage par étirage-soufflage dans une seconde étape.

5. Procédé selon la revendication 1, dans lequel la préforme est préparée et soumise à un moulage par étirage-soufflage sans refroidissement à température ambiante.
